# EUROPEAN PATENT APPLICATION

(11) **EP 2 667 614 A1**
(43) Date of publication of application: **27.11.2013**
(21) Application number: 12736885.0
(22) Date of filing: 19.01.2012
(51) Int. Cl.: H04N 7/32, H04N 13/02, H04N 7/26

(54) **MOTION PICTURE CODING DEVICE AND MOTION PICTURE CODING METHOD**

(30) Priority: 21.01.2011 JP 2011010390
(71) Applicant: Panasonic Corporation, Osaka 571-8501 (JP)
(72) Inventor: ABE, Kiyofumi, Osaka 540-6207 (JP); OHGOSE, Hideyuki, Osaka 540-6207 (JP); ARAKAWA, Hiroshi, Osaka 540-6207 (JP); KIMURA, Kazuhito, Osaka 540-6207 (JP)
(74) Representative: Vigand, Philippe
(86) International application number: PCT/JP2012/000309
(87) International publication number: WO 2012/098890

(57) **Abstract**

A video encoding apparatus (300) includes: an obtaining unit (310) which sequentially obtains pictures included in video signals; and an encoding unit (320) which (i) encodes an anchor picture in a first video signal using only an intra prediction, and outputs the anchor picture in an I-picture format, (ii) encodes an anchor picture in a second video signal using only the intra prediction, and outputs the anchor picture in a P-picture format, and (iii) encodes pictures other than the anchor pictures and included in the first and second video signals using the intra prediction or an inter prediction in a temporal direction.

## Description

### [Technical Field]

The present disclosure relates to a video encoding apparatus and a video encoding method for encoding video signals each corresponding to a different view, and a video encoding method.

### [Background Art]

With the development of multimedia applications in recent years, it has become common to handle information of all media such as video, audio, and text in an integrated manner. Digitized video has an enormous amount of data, and so an information compression technology for video is essential for storage and transmission of the video. It is also important to standardize the compression technology, in order to achieve interoperability of compressed video data. Examples of video compression technology standards include H.261, H.263, and H.264 of ITU-T (International Telecommunication Union - Telecommunication Standardization Sector), MPEG-1, MPEG-3, MPEG-4, and MPEG-4 AVC of ISO (International Organization for Standardization), and so on.

In such video encoding, information is compressed by reducing redundancy in a temporal direction and a spatial direction. In the video encoding, there is a picture called I-picture -a picture obtained through intra-prediction coding with no reference made to a reference picture in order to reduce spatial redundancy. There is also another picture called P-picture -a picture obtained through inter-prediction coding with reference to only one picture in order to reduce temporal redundancy. There is still another picture referred to as B-picture -a picture obtained through inter-prediction coding with simultaneous reference to two pictures.

Each picture to be coded is divided into coding unit blocks called macroblock (MB). In a coding process, a video coding apparatus conducts intra prediction or inter prediction for each block. In detail, the video coding apparatus calculates a difference between an input image to be coded and a prediction image generated by prediction for each MB, performs orthogonal transformation such as discrete cosine transform on the calculated differential image, and quantizes each transform coefficient resulting from the transformation. Information is compressed in this way.

Multiview Video Coding (MVC) is an amendment to the H.264 video compression standard. The MVC enables encoding of video obtained from multiple views. Images having the same object and obtained from multiple views at the same time are highly correlated with one another. Taking advantage of such a characteristic, the MVC conducts inter prediction with reference not only to an image having a view of a picture to be coded but also to an image having another view. Such a feature contributes to an improvement in coding efficiency. For example, according to the format specification of the Blu-ray disc (BD) defined by the Blu-ray Disc Association (BDA), the MVC is adopted as the standard format for two-view 3D video.

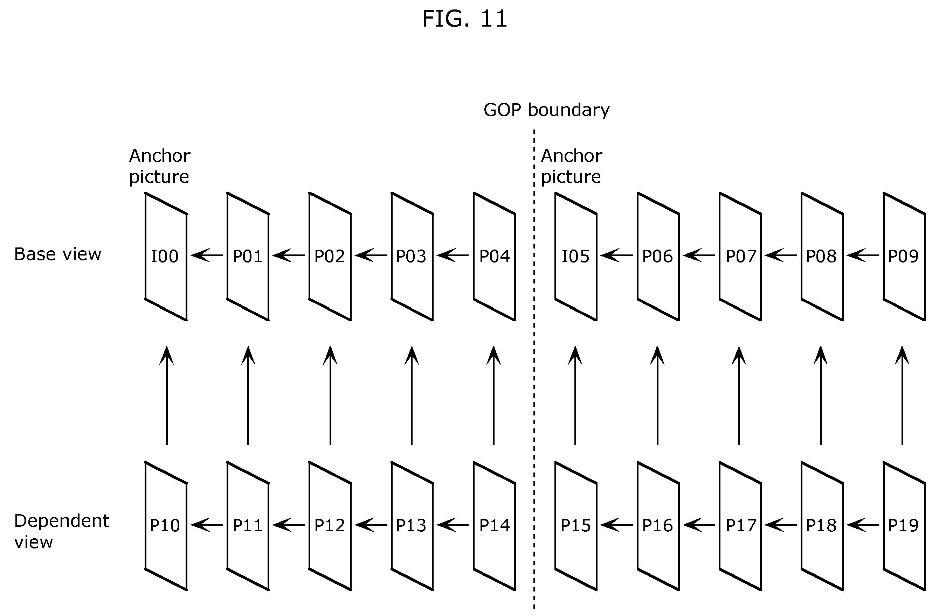

FIG. 11 exemplifies a structure of pictures in the MVC, and a reference relationship between the pictures.

As shown in FIG. 11, the MVC requires at least two streams: one is called base view and the other is called dependant view.

Each of pictures included in the base view refers only to a previously coded picture in the base view. In other words, the base view is encoded and decoded only with a coded signal which belongs to the base view itself.

In contrast, each of pictures included in the dependant view is subject to two kinds of reference: one picture refers to another picture which is previously encoded and included in the same view (temporal reference); and to still another picture included in the base view and corresponding to the one picture (inter-view reference). For example, a picture P10 in the dependant view refers to a picture I00 in the base view. Moreover, a picture P11 in the dependant view refers to the picture P10 in the dependant view and a picture P01 in the base view. Hence, more kinds of pictures can be referred to in encoding with the dependent view than in the encoding with the base view, which contributes to more efficient encoding. It is noted that the dependant view is also called non-base view.

Moreover, there is still another picture called anchor picture, such as pictures I05 and P15. Each of the pictures is a first picture immediately after a group of pictures (GOP) boundary. The anchor picture allows all the pictures following the anchor picture in display order to be encoded and decoded with no reference made to a previous picture before the anchor picture. Such a feature implements a random access capability which enables an image after the anchor picture to be reproduced without a coded signal before the anchor picture, when, in decoding, a stream is reproduced in the middle (See Patent Literature 1, for example).

As described above, the anchor picture cannot make temporal reference to a previously-encoded picture. Thus, in the base view, the anchor picture is encoded as an I-picture using only the intra-prediction coding. In contrast, in the dependant view, the anchor picture is encoded either as an I-picture as seen above or as a P-picture using only the inter-view reference. However, the BD format specification prohibits using an I-picture in the dependant view. Hence, an anchor picture in the dependant view needs to be encoded as a P-picture using the inter-view reference.

### [Citation List]

### [Patent Literature]

[PTL 1]
   Japanese Unexamined Patent Application Publication No. 2007-159113

### [Summary of Invention]

### [Technical Problem]

The inter-view reference allows the dependant view to conduct more efficient encoding. In order to decode each of the pictures in the dependant view, however, all the pictures having a dependency relationship in the base view need to be decoded. Such decoding makes processing, in particular the one for editing, very complex. In order to avoid such complexity, required is encoding without inter-view reference.

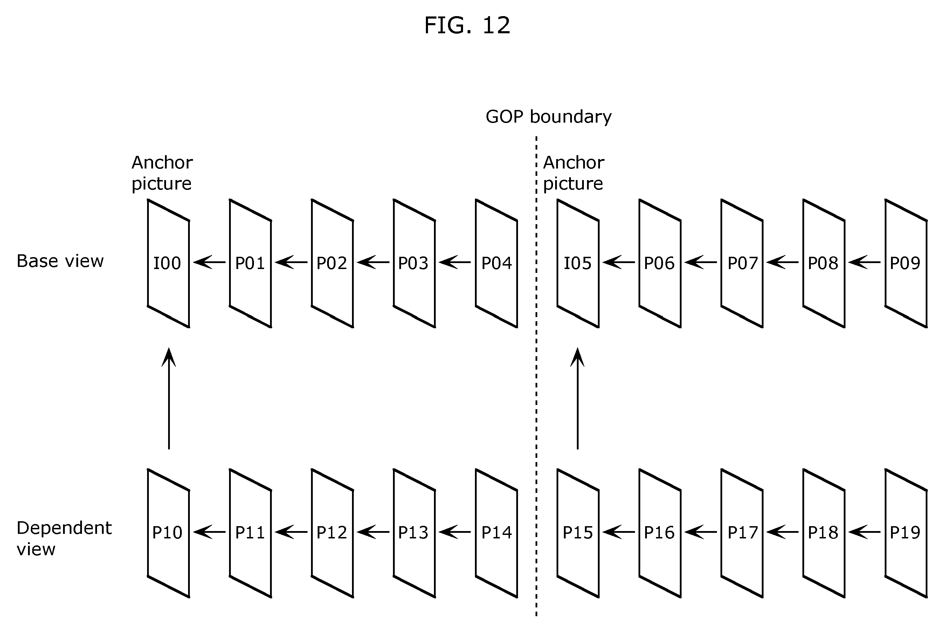

According to the BD format specification, however, an anchor picture in the dependant view may not be encoded as an I-picture. As a result, as shown in FIG. 12, only the anchor picture is subject to the inter-view reference and cannot completely break off the dependency relationship with the base view.

The present disclosure is conceived in view of the above problems and implements a video encoding apparatus and a video encoding method which make it possible to generate an encoded stream in the dependant view. Such an encoded stream does not have to depend on the base view without an I-picture.

### [Solution to Problem]

A video encoding apparatus according to an aspect of the present disclosure encodes video signals each having a different viewpoint. Specifically, the video encoding apparatus includes: an obtaining unit which sequentially obtains pictures included in the video signals; and an encoding unit which encodes the pictures obtained by the obtaining unit using inter prediction in a temporal direction or intra prediction. The encoding unit (i) encodes an anchor picture using only the intra prediction, and outputs the encoded anchor picture in an I-picture format, the anchor picture being included in the pictures in a first video signal of the video signals, providing a random access capability, and located at a start of a group of pictures (GOP), (ii) encodes the anchor picture using only the intra prediction, and outputs the encoded anchor picture in a P-picture format, the anchor picture being included in the pictures in a second video signal of the video signals; and (iii) encodes the pictures other than the anchor pictures and included in the first video signal and the second video signal using the inter prediction in the temporal direction or the intra prediction, and outputs the encoded pictures.

Such features allows the video encoding apparatus to encode the dependant view as a stream which does not require the base view in decoding, while satisfying the format standard of the BD.

As an example, the encoding unit may encode the first video signal as a base view in a multi view coding (MVC) standard, and the second video signal as a non-base view in the MVC standard.

Furthermore, the encoding unit may encode a picture in the pictures included in the second video signal using inter prediction in a view direction which involves reference to an other picture in the pictures included in the first video signal and corresponding to the picture. Moreover, the video encoding apparatus may include an encoding condition setting unit which selects one of a first encoding condition and a second encoding condition, the first encoding condition being set to (i) encode the anchor picture using only the intra prediction and (ii) output the encoded anchor picture in the P-picture format, and the second encoding condition being set to (i) encode the anchor picture using inter prediction in the view direction and (ii) output the encoded anchor picture in the P-picture format. In addition, the encoding unit may execute the encoding according to one of the first encoding condition and the second encoding condition set by the encoding condition setting unit.

By selecting whether or not the second video signal is to be dependent on the first video signal, the encoding unit can adoptively select the independence of the second video signal (the second video signal is independent from the first video signal) or the encoding efficiency for the second video signal (the second video signal is dependent on the first video signal).

The first encoding condition may further be set to encode a picture in the pictures other than the anchor picture and included in the second video signal, using only the inter prediction in the temporal direction and the inter prediction among the inter prediction, the inter prediction in the temporal direction, and the inter prediction in the view direction. The second encoding condition may further be set to encode a picture in the pictures other than the anchor picture and included in the second video signal, using all the inter prediction, the inter prediction in the temporal direction, and the inter prediction in the view direction.

Hence, none of the pictures in the second video signal have to depend on the first video signal. It is noted that only the anchor picture is likely to be decoded in fast forward and fast review. Hence, canceling the dependency relationship only to the anchor picture can achieve an effect.

The encoding condition setting unit may (i) obtain a difference in image characteristic between two pictures each included in one of the first video signal and the second video signal and having approximately same time information, and (ii) select the first encoding condition in the case where the obtained difference in image characteristic is greater than or equal to a predetermined threshold value.

This feature makes it possible to improve efficiency in encoding the dependant view.

As an example, the encoding condition setting unit may obtain a difference in image characteristic between the two pictures each included in one of the first video signal and the second video signal and having approximately the same time information, by comparing pixel values of the two pictures.

As another example, the obtaining unit may obtain a shooting condition in capturing the first video signal and a shooting condition in capturing the second video signal. Then, the encoding condition setting unit may obtain a difference in image characteristic between the two pictures, by comparing the shooting conditions of the first video signal and the second video signal.

A video encoding method according to an aspect of the present disclosure is provided to encode video signals each having a different viewpoint. Specifically, the video encoding method includes: sequentially obtaining pictures included in the video signals; and encoding the pictures obtained in the obtaining using inter prediction in a temporal direction or intra prediction. The encoding includes: encoding an anchor picture using only the intra prediction, and outputting the encoded anchor picture in an I-picture format, the anchor picture being included in the pictures in a first video signal of the video signals, providing a random access capability, and located at a start of a GOP; encoding an anchor picture using only the intra prediction, and outputting the encoded anchor picture in a P-picture format, the anchor picture being included in the pictures in a second video signal of the video signals; and encoding the pictures other than the anchor pictures and included in the first video signal and the second video signal using the inter prediction in the temporal direction or the intra prediction, and outputting the encoded pictures.

It is noted that the present disclosure can be implemented not only as the video encoding apparatus and the video encoding method but also as an integrated circuit which executes similar processing executed by each of constituent elements included in the video encoding apparatus and as a program to cause a computer to execute each of steps of the video encoding method.

### [Advantageous Effects of Invention]

The present disclosure makes it possible to generate a dependant view as a stream which does not require a base view in decoding, even though video signals each corresponding to a different view are encoded according to a BD format.

### [Brief Description of Drawings]

[Fig. 1]

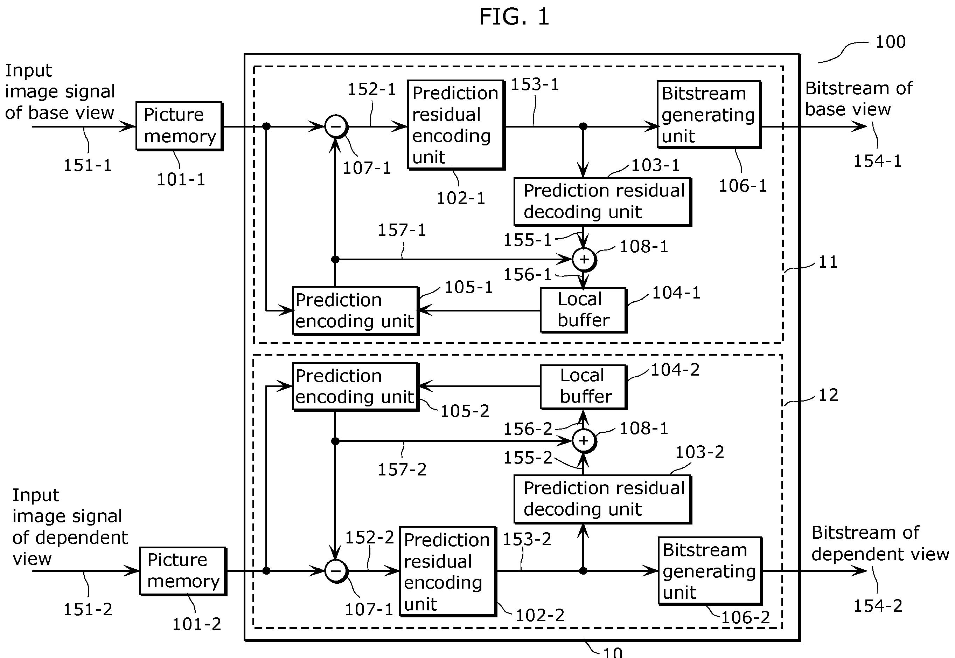

   FIG. 1 shows a block diagram of a video encoding apparatus according to Embodiment 1.
[Fig. 2]

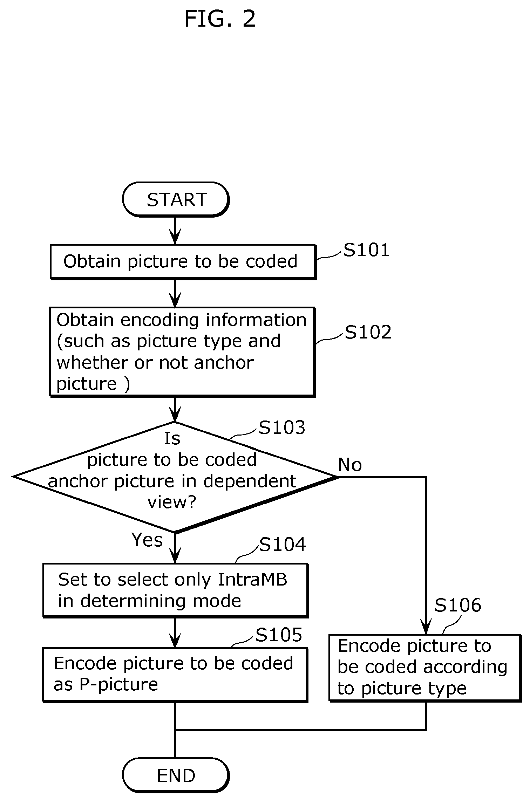

   FIG. 2 depicts a flowchart showing how a picture is encoded according to Embodiment 1.
[Fig. 3]

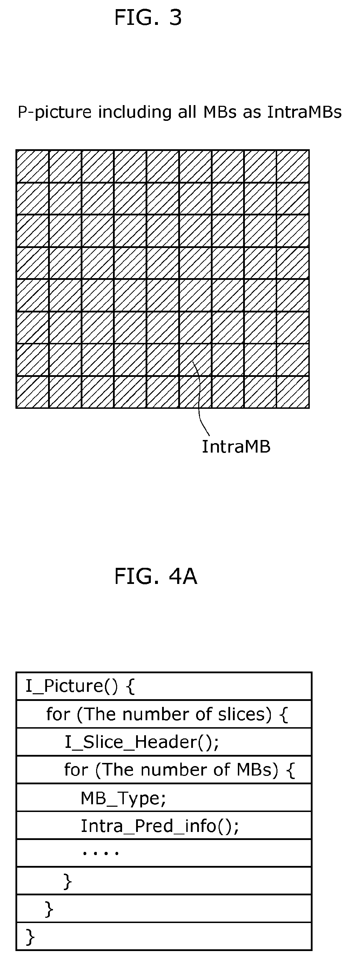

   FIG. 3 depicts a conceptual diagram showing an encoding mode for each MB in an anchor picture of a dependant view according to Embodiment 1.
[Fig. 4A]
   FIG. 4A shows how the syntax of an I-picture is formed.
[Fig. 4B]

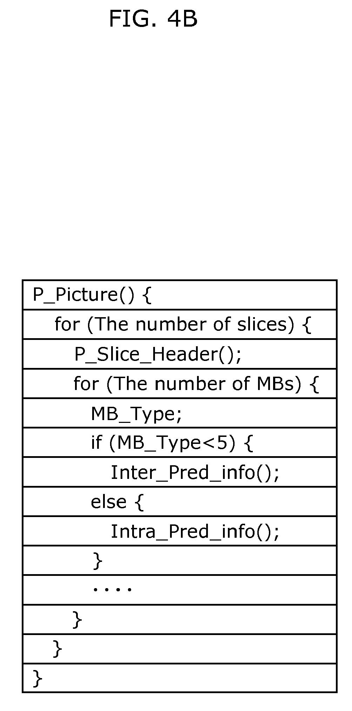

   FIG. 4B shows how the syntax of a P-picture is formed.
[Fig. 5]

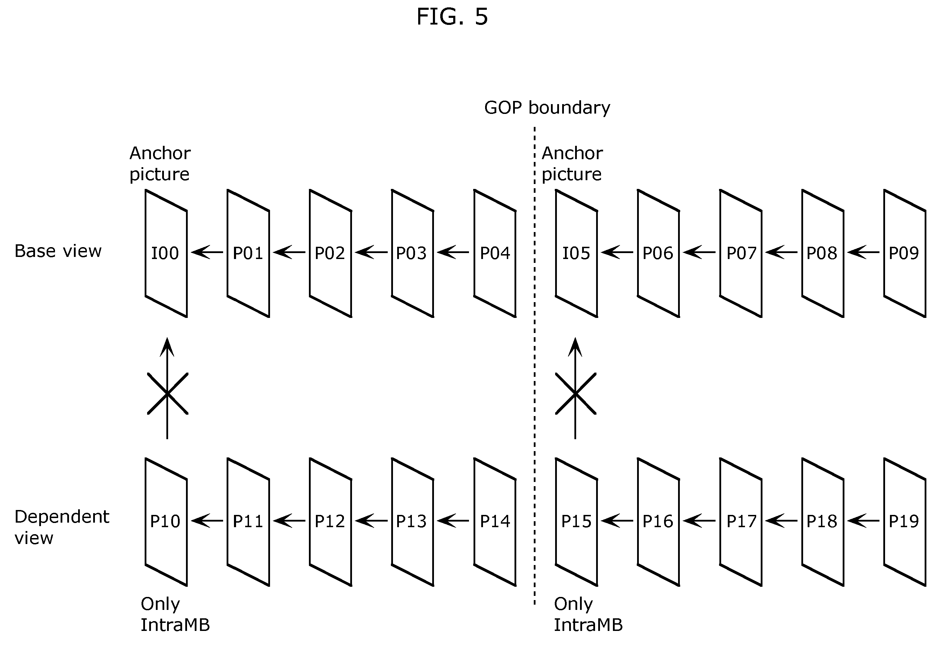

   FIG. 5 shows a reference structure between the base view and the dependant view according to Embodiment 1.
[Fig. 6]

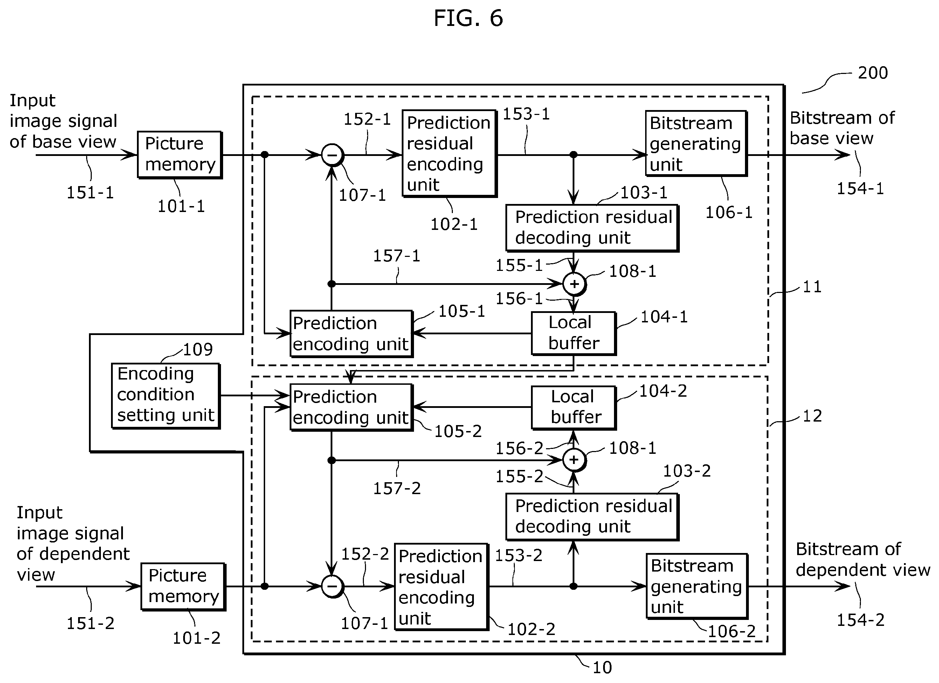

   FIG. 6 shows a block diagram of a video encoding apparatus according to Embodiment 2.
[Fig. 7]

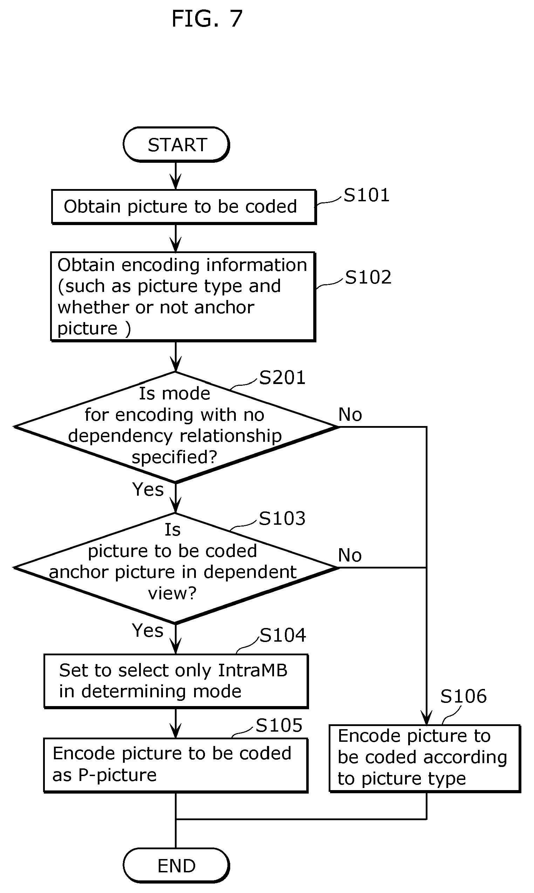

   FIG. 7 depicts a flowchart showing how a picture is encoded according to Embodiment 2.
[Fig. 8]

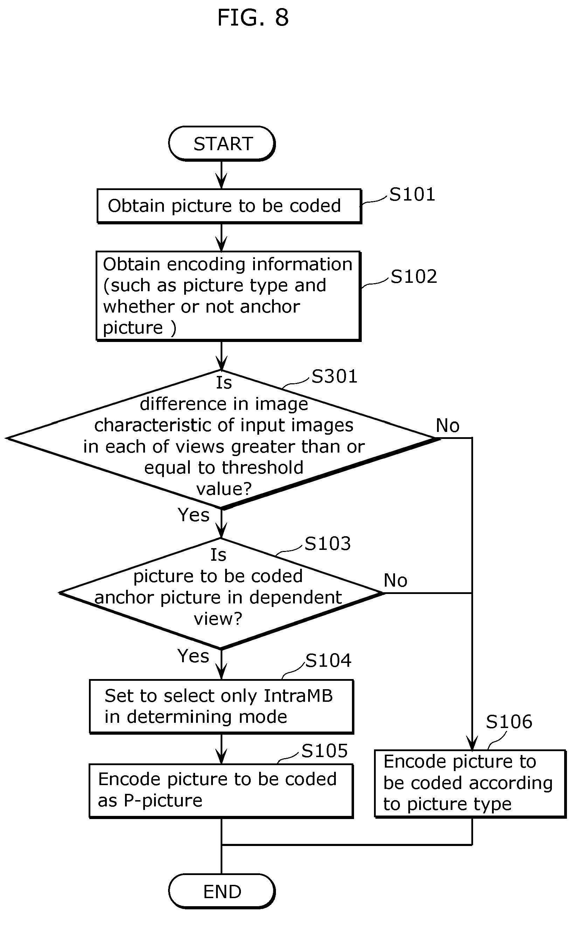

   FIG. 8 depicts a flowchart showing how a picture is encoded according to Embodiment 2.
[Fig. 9]

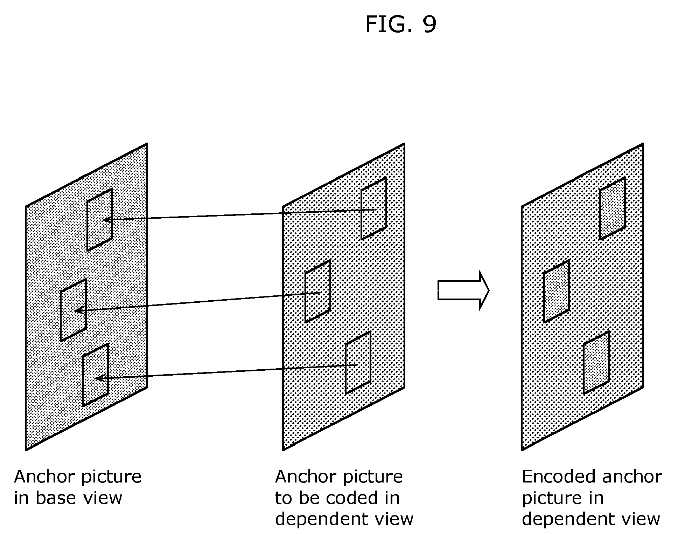

   FIG. 9 shows how image characteristic degrades when encoding is conducted with reference to a picture in a different view with different image characteristic.
[Fig. 10]

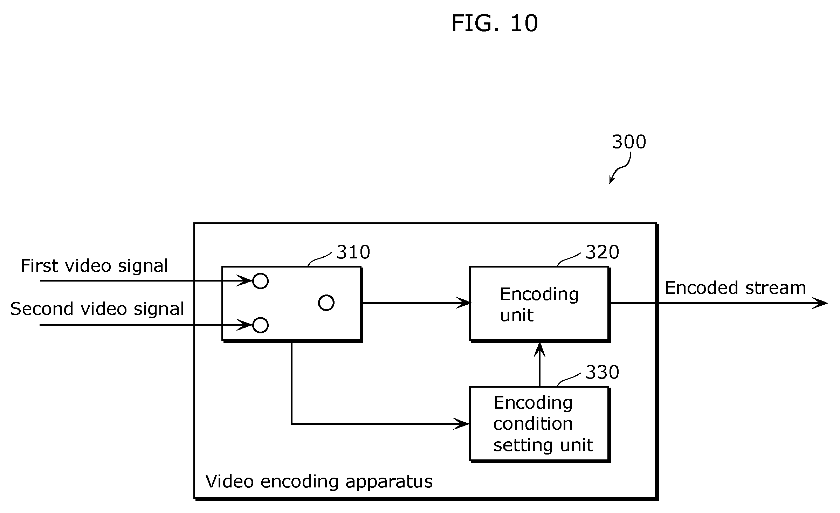

   FIG. 10 depicts a block diagram showing a modification of the video encoding apparatus according to Embodiment 2.
[Fig. 11]
   FIG. 11 exemplifies a conventional reference structure between a base view and a dependant view.
[Fig. 12]
   FIG. 12 exemplifies another conventional reference structure between a base view and a dependant view.

### [Description of Embodiments]

### [Embodiment 1]

Embodiment 1 of the present disclosure is described hereinafter, with reference to the drawings.

FIG. 1 shows a block diagram of a video encoding apparatus 100 according to Embodiment 1 of the present disclosure.

The video encoding apparatus 100 in FIG. 1 encodes two input images -one in a base view and the other one in a dependant view- to generate bitstreams each corresponding to one of the views.

The video encoding apparatus 100 includes a picture memory 101-1, a picture memory 101-2, and an encoding unit 10. The encoding unit 10 includes a prediction residual encoding unit 102-1, a prediction residual encoding unit 102-2, a prediction residual decoding unit 103-1, a prediction residual decoding unit 103-2, a local buffer 104-1, a local buffer 104-2, a prediction encoding unit 105-1, a prediction encoding unit 105-2, a bitstrem generating unit 106-1, a bitstream generating unit 106-2, a difference operating unit 107-1, a difference operating unit 107-2, an addition operating unit 108-1, and an addition operating unit 108-2.

It is noted that the prediction residual encoding unit 102-1, the prediction residual decoding unit 103-1, the local buffer 104-1, the prediction encoding unit 105-1, the bitstrem generating unit 106-1, the difference operating unit 107-1, and the addition operating unit 108-1 form a first encoding unit 11. The first encoding unit 11 encodes a picture included in the base view and stored in the picture memory 101-1. The prediction residual encoding unit 102-2, the prediction residual decoding unit 103-2, the local buffer 104-2, the prediction encoding unit 105-2, the bitstream generating unit 106-2, the difference operating unit 107-2, and the addition operating unit 108-2 form a second encoding unit 12. The second encoding unit 12 encodes a picture included in the dependant view and stored in the picture memory 101-2.

After input image signals 151-1 of the base view and input image signals 151-2 of the dependant view -both inputted for each picture- are rearranged from display order (or obtained order) to encoding order, the picture memories 101-1 and 101-2 stores the rearranged input image signals 151-1 and 151-2. Then, upon receiving read instructions from the difference operating units 107-1 and 107-2, and the prediction encoding units 105-1 and 105-2, the picture memories 101-1 and 101-2 outputs image signals corresponding to the read instructions.

Here, each of the pictures is segmented into macroblocks (MBs). An MB is composed of, for example, 16 horizontal pixels x 16 vertical pixels. The subsequent processing is performed based on each MB unit. It is noted that the above feature is to segment a picture into blocks each composed of 16 horizontal pixels x 16 vertical pixels. The segmentation may be performed in any given block size as far as the block size conforms to the encoding standard, such as blocks each composed of 8 horizontal pixels x 8 vertical pixels.

The prediction residual encoding units 102-1 and 102-2 perform orthogonal transformation on difference image signals 152-1 and 152-2 to be outputted from the difference operating units 107-1 and 107-2, and further perform quantization on an orthogonal transform coefficient for each of frequency components obtained through the orthogonal transformation in order to compress image information. Then, the prediction residual encoding unit 102-1 outputs a coded residual signal 153-1 to the prediction residual decoding unit 103-1 and the bitstrem generating unit 106-1. The prediction residual encoding unit 102-2 outputs a coded residual signal 153-2 to the prediction residual decoding unit 103-2 and the bitstream generating unit 106-2. Here, the coded residual signals 153-1 and 153-2 are information obtained through compression and typically quantized coefficients.

The prediction residual decoding units 103-1 and 103-2 restores the image information by performing inverse quantization and inverse orthogonal transformation on the coded residual signals 153-1 and 153-2 respectively outputted from the prediction residual encoding units 102-1 and 102-2, and respectively generate decoded residual signals 155-1 and 155-2. Then, the prediction residual decoding units 103-1 and 103-2 output the generated decoded residual signals 155-1 and 155-2 to the addition operating units 108-1 and 108-2.

The local buffers 104-1 and 140-2 store reconstructed image signals 156-1 and 156-2 to be outputted respectively from the addition operating units 108-1 and 108-2. This is because the reconstructed image signals 156-1 and 156-2 are used as reference pictures for coding MBs which follow current MBs to be coded.

Based on the input image signals 151-1 and 151-2 to be respectively outputted from the picture memories 101-1 and 101-2, the prediction encoding units 105-1 and 105-2 respectively generate prediction image signals 157-1 and 157-2, using inter prediction in the temporal direction or intra prediction. Then, the prediction encoding unit 105-1 outputs the generated prediction image signal 157-1 to the difference operating unit 107-1 and the addition operating unit 108-1, and the prediction encoding unit 105-2 outputs the generated prediction image signal 157-2 to the difference operating unit 107-2 and the addition operating unit 108-2.

It is noted that, in using the inter prediction in the temporal direction, the prediction encoding units 105-1 and 105-2 use reconstructed image signals 156-1 and 156-2 of previous pictures which has been already decoded and stored in the local buffers 104-1 and 104-2. Moreover, in using the intra prediction, the prediction encoding units 105-1 and 105-2 use reconstructed image signals 156-1 and 156-2 for coded MBs which are adjacent to MBs to be coded. The MBs to be coded and the coded MBs are both included in the same picture. A technique to determine which mode is used -whether the intra prediction or the inter prediction- is executed based on a prediction that which prediction technique requires less information of a residual signal.

It is noted that, in the prediction encoding units 105-1 and 105-2 according to Embodiment 1, the use of only the intra prediction or the use of both the inter prediction in the temporal direction and the intra prediction is predetermined based on whether or not a picture to be coded is an anchor picture. Specifically, in the case where a picture to be coded is an anchor picture, the prediction encoding units 105-1 and 105-2 use only the intra prediction. In the case where a picture to be coded is a picture other than an anchor picture, the prediction encoding units 105-1 and 105-2 use both the inter prediction in the temporal direction and the intra prediction.

The bitstrem generating units 106-1 and 106-2 respectively generate bitstreams 154-1 and 154-2 by performing variable length coding on the coded residual signals 153-1 and 153-2, as well as on other information on encoding, to be outputted from the prediction residual encoding units 102-1 and 102-2.

It is noted that the bitstrem generating unit 106-1 outputs an anchor picture, encoded only with the intra prediction and included in the base view, as a bitstream 154-1 in the I-picture format. Meanwhile, the bitstrem generating unit 106-2 outputs an anchor picture, encoded only with the intra prediction and included in the dependant view, as a bitstream 154-2 in the P-picture format. Furthermore, the bitstrem generating units 106-1 and 106-2 output pictures other than the anchor pictures in the base view and the dependant view as bitstreams 154-1 and 154-2 in a format according to the type of the pictures.

The difference operating unit 107-1 generates the difference image signal 152-1 and outputs the generated signal to the prediction residual encoding unit 102-1. Here, the difference image signal 152-1 is a difference value between the input image signal 151-1 read from the picture memory 101-1 and the prediction image signal 157-1 to be outputted from the prediction encoding unit 105-1. The difference operating unit 107-2 generates the difference image signal 152-2 and outputs the generated signal to the prediction residual encoding unit 102-2. Here, the difference image signal 152-2 is a difference value between the input image signal 151-2 read from the picture memory 101-2 and the prediction image signal 157-2 to be outputted from the prediction encoding unit 105-2.

The addition operating unit 108-1 adds the residual signal 155-1 to be outputted from a prediction error decoding unit 103-1 with the prediction image signal 157-1 to be outputted from the prediction encoding unit 105-1, so that the addition operating unit 108-1 generates the reconstructed image signal 156-1. The addition operating unit 108-2 adds the residual signal 155-2 to be outputted from a prediction error decoding unit 103-2 with the prediction image signal 157-2 to be outputted from the prediction encoding unit 105-2, so that the addition operating unit 108-2 generates the reconstructed image signal 156-2. Then, the addition operating units 108-1 and 108-2 respectively output the generated reconstructed image signals 156-1 and 156-2 to the local buffers 104-1 and 104-2.

As described above, the structural elements of the first and second encoding units 11 and 12 share their operations in common except that the first encoding unit 11 outputs an anchor picture in the base view as the bitstream 154-1 in the I-picture format and that the second encoding unit 12 outputs an anchor picture in the dependant view as the bitstream 154-2 in the P-picture format.

In other words, the video encoding apparatus 100 structured above can be implemented with two types of conventional video encoding apparatuses and slight changes in processing of the prediction encoding units 105-1 and 105-2 and the bitstrem generating units 106-1 and 106-2. Such a feature eliminates the need of designing a new circuit, which makes the video encoding apparatus 100 available at a low cost.

FIG. 2 depicts a flowchart showing how the second encoding unit 12 of the video encoding apparatus 100 executes encoding. It is noted that the operations of the first encoding unit 11 are in common with those of the second encoding unit 12 except that an anchor picture in the base view is outputted in the I-picture format (S105). Hence, the details of the operations of the first encoding unit 11 shall be omitted.

First, the prediction encoding unit 105-2 obtains a picture to be coded from the picture memory 101-2 (S101). In addition, the prediction encoding unit 105-2 obtains encoding information from an external apparatus (typically, an apparatus in an upper level, such as the video encoding apparatus 100) (S102). The encoding information obtained in Step S102 includes, for example, the picture type (I-picture, P-picture, and B-picture) of a picture to be coded and information indicating whether or not the picture to be coded is an anchor picture. Typically, an anchor picture in the dependant view is a P-picture, and a picture other than the anchor picture in the dependant view is either a P-picture or a B-picture.

Next, the prediction encoding unit 105-2 determines whether or not the picture to be coded is an anchor picture in the dependant view (S103). It is noted that, as shown in FIG. 11, the anchor picture is a first picture immediately after a GOP boundary. The feature of the anchor picture is that the anchor picture allows all the pictures following the anchor picture in display order to be encoded and decoded with no reference made to a previous picture before the anchor picture.

In the case of determining Yes in Step S103, the prediction encoding unit 105-2 fixes the prediction mode for all the MBs in the picture to be coded to the intra mode (intra prediction mode) (S104). Then, the second encoding unit 12 (the prediction encoding unit 105-2, the difference operating unit 107-2, the prediction residual encoding unit 102-2, and the bitstream generating unit 106-2) encodes all the MBs in the picture to be coded (the anchor picture in the dependant view) using only the intra prediction, and outputs the encoded picture in the P-picture format (S105).

In contrast, in the case of determining No in Step S103, the second encoding unit 12 (the prediction encoding unit 105-2, the difference operating unit 107-2, the prediction residual encoding unit 102-2, and the bitstream generating unit 106-2) encodes all the MBs in the picture to be coded using the inter prediction in the temporal direction or the intra prediction, and outputs the encoded picture in a format according to the picture type obtained in Step S102 (S106).

FIG. 3 shows an encoding mode for all the MBs in a picture to be coded when the intra prediction is always selected. Since the intra prediction is always selected as an encoding mode for an anchor picture in the dependant view, all the MBs are encoded, as shown in FIG. 3, as P-picture for the intra prediction (Intra MBs).

FIG. 4A shows how the syntax of an I-picture is formed. FIG. 4B shows how the syntax of a P-picture is formed. Each picture is segmented into areas referred to as slice -each of the areas includes one or more MBs-, and includes header information for each slice. In other words, "I_Slice_Header ()" which describes encoding information for I-picture is assigned to an I-picture, and "P_Slice_Header ()" which describes encoding information for P-picture is assigned to a P-picture.

Next, the encoding information of MB is described as much as the number of MBs included in each slice. "MB_Type" is information indicating the prediction mode of an MB. A value of 0 to 25 is assigned to the I-picture, and each value indicates the intra prediction mode. In other words, prediction information for the intra prediction is encoded always with "Intra_Prede_info ()".

Meanwhile, a value of 0 to 30 is assigned to the P-picture. 0 to 4 indicate the inter prediction mode, and 5 to 30 indicate the intra prediction mode. In other words, in the case of 0 to 4, prediction information for the inter prediction is encoded with "Inter_Pred_info ()", and in the case of 5 to 30, prediction information for the intra prediction is encoded with "Intra_Prede_info ()".

The picture illustrated in FIG. 3 is a P-picture in which all the MBs are encoded with the intra prediction (Intra MB). Hence, the syntax of the illustrated picture is exactly the same as that of the P-picture illustrated in FIG. 4B, and "MB_Type" is always any one of 5 to 30. In other words, only "Intra_Prede_info ()" is encoded.

FIG. 5 shows a reference relationship of coded signals to be generated in the above processing when coding is performed in the reference structure illustrated in FIG. 12. In FIG. 5, pictures P10 and P15 are anchor pictures in the dependant view, and all the MBs in the pictures are encoded as IntraMBs. Hence, all the pictures including the anchor pictures are encoded without the inter-view reference.

Such a feature makes it possible to encode and decode all the pictures in the dependant view without depending on the base view at all, even though the encoding technique complies with the format specification of the BD. As a result, an image signal in the dependant view and an image signal in the base view can be handled completely independently from each other. In particular, when the data in the dependant view is manipulated in a task such as editing, an image can be decoded only with the stream of the dependant view without the stream of the base view. Such a feature contributes to a significant improvement in the efficiency of a task such as editing.

### (Conclusion)

The video encoding apparatus 100 according to Embodiment 1 encodes multiple video signals each corresponding to a different view. The video encoding apparatus 100 includes picture memories 101-1 and 101-2 which obtain multiple video signals, and the encoding unit 10 which encodes the video signals. The encoding unit 10 (i)encodes a picture in a first video signal of the video signals using an encoding condition (the inter prediction in the temporal direction or the intra prediction) under which only information included in the first video signal is available, (ii) encodes, using a P-picture employing only intra prediction, an anchor picture which is included in a second video signal of the video signals, providing a random access capability, and located at the start of a GOP, and (iii) encodes a picture other than the anchor picture which is located at the start of the GOP, using an encoding condition under which only information included in the second video signal is available.

The video encoding apparatus 100 according to Embodiment 1 encodes multiple video signals each corresponding to a different view. The video encoding apparatus 100 includes picture memories 101-1 and 101-2 which obtain multiple video signals, and the encoding unit 10 which encodes the video signals according to the MVC standard. The encoding unit 10 encodes (i) a first video signal of the video signals as a base view, and (ii) a second video signal of the video signals as a non-base view. When a picture to be coded is an anchor picture located at the start of a GOP which makes random access possible, the encoding unit 10 encodes the picture using a P-picture only employing the intra prediction.

Such features allow the video encoding apparatus 100 to encode the dependant view as a stream which does not require the base view in decoding, while satisfying the format standard of the BD.

### [Embodiment 2]

Embodiment 2 of the present disclosure is described hereinafter, with reference to the drawings.

FIG. 6 shows a block diagram of a video encoding apparatus 200 according to Embodiment 2 of the present disclosure. It is noted that the details of common features with Embodiment 1 shall be omitted, and only the differences from Embodiment 1 shall be described. The video encoding apparatus 200 in FIG. 6 is different from the video encoding apparatus 100 in FIG. 1 in that the video encoding apparatus 200 further includes an encoding condition setting unit 109, and the prediction encoding unit 105-2 of the second encoding unit 12 can refer to a picture stored in the local buffer 104-1 of the first encoding unit 11.

The encoding condition setting unit 109 gives an instruction to the prediction encoding unit 105-2 to determine whether or not a prediction technique for all the MBs in a current picture to be coded in the dependant view is compulsorily limited only to the intra prediction. Specifically, the encoding condition setting unit 109 generates a compulsory intra-prediction instructing signal 158 indicating that the prediction technique is limited to the intra prediction, and output the generated signal to the prediction encoding unit 105-2. Then, the prediction encoding unit 105-2 determines a prediction mode for the MBs to be to be coded, depending on whether or not the compulsory intra-prediction instructing signal 158 is obtained.

Furthermore, as a reference technique for the inter prediction, the prediction encoding unit 105-2 according to Embodiment 2 can execute two kinds of references: one is to refer to a previously-encoded picture included in the same view (temporal reference), and the other is to refer to a corresponding picture in the base view (inter-view reference). In other words, the prediction encoding unit 105-2 can perform prediction coding with reference to the reconstructed image signal 156-1 to be stored in the local buffer 104-1, as well as to the reconstructed image signal 156-2 to be stored in the local buffer 104-2. It is noted that the "corresponding picture" includes two pictures each included in one of the base view and the dependant view and shot (or to be displayed) at the same time.

FIG. 7 depicts a flowchart showing how a prediction mode is controlled by the encoding condition setting unit 109 in the video encoding apparatus 200 according to Embodiment 2.

First, after the execution of Steps S101 and S102 (the details shall be omitted since they are in common with the ones in FIG.2), the encoding condition setting unit 109 determines whether or not, in encoding video to be coded, specified is a mode for encoding the video with no dependency relationship between the base view and the dependant view (S201). In the case where the determination is Yes, (in other words, no dependency relationship is established between the base view and the dependant view), the encoding condition setting unit 109 executes the processing in Steps S103 to S105 in FIG. 2.

In other words, the encoding condition setting unit 109 determines whether or not the picture to be coded is an anchor picture in the dependant view (S103). Furthermore, in the case where the determination is Yes in Step S103, the encoding condition setting unit 109 sets a value of the compulsory intra-prediction instructing signal 158 so that the intra prediction (Intra MB) is always selected in the mode determining processing executed by the prediction encoding unit 105-2 (S104).

According to the instruction of the compulsory intra-prediction instructing signal 158, the prediction encoding unit 105-2 executes the mode determining processing. In other words, the prediction encoding unit 105-2 encodes all the MBs in a picture to be coded (an anchor picture in the dependant view) using only the intra prediction, and outputs the encoded picture as the bitstream 154-2 in the P-picture format (S105).

In contrast, in the case where the determination is No in Step S201 or Step S103, the encoding condition setting unit 109 does not set the value of the compulsory intra-prediction instructing signal 158. Then, in the mode determining processing for the picture to be coded, the prediction encoding unit 105-2 allows both the intra prediction and the inter prediction to be selectable. In other words, when a picture to be coded is an anchor picture, the second encoding unit 12 encodes the picture using only one of the inter prediction in the temporal direction and the intra prediction. When a picture to be coded is other than an anchor picture, the second encoding unit 12 encodes the picture using one of the intra prediction, the inter prediction in the temporal direction, and the inter prediction in the view direction, and outputs the encoded picture in a format according to the picture type obtained in Step S102 (S106).

Hence, all the pictures in the dependant view can be encoded and decoded without depending on the base view at all, only in the case where specified is an encoding mode which establishes no dependency relationship between the base view and the dependant view. In contrast, in the case where the encoding mode which establishes no dependency relationship between the base view and the dependant view is not specified, the encoding is executed with the dependant view referring to the base view as has conventionally been executed. Such a feature contributes to an improvement in coding efficiency, which makes it possible to generate a stream with no degradation in image characteristic and the amount of code reduced.

Next, the flowchart in FIG. 8 shows another technique for controlling the prediction mode by the encoding condition setting unit 109 in the video encoding apparatus 200.

The processing in FIG. 8 shows that, after Steps S101 and S102 are executed (the details shall be omitted since they are in common with the ones in FIG.2), the encoding condition setting unit 109 determines whether or not the difference in image characteristic between an input image in the base view and an input image in the dependant view is greater than or equal to a threshold value (S301). The encoding condition setting unit 109 executes (i) processing in Steps S103 to S105 in the case where the determination in Step S301 is Yes, and (ii) processing in Step S106 in the case where the determination in Step S301 is No. The details of the processing are exactly the same as those described in FIG. 7.

It is noted that the difference in image characteristic can be obtained, for example, using pixel values of two corresponding pictures each included in the base view and the dependant view. For example, the difference in image characteristic may be a difference between average luminance values of two inputted pictures. Moreover, the difference in image characteristic may be: a difference between average chrominance values of two inputted pictures, a difference between variance of pixel values of two inputted pictures, or a difference in the occurrence tendency of frequency components observed when frequencies of two inputted pictures are converted.

Furthermore, the difference in image characteristic may be obtained from shooting information (camera information) on two shot inputted images each included in the base view and the dependant view. In other words, the first encoding unit 11 and the second encoding unit 12 may obtain pictures to be coded and the shooting condition when the pictures are shot, and determine whether the difference in characteristic (difference in image characteristic) of the shooting information between the obtained two corresponding pictures is greater than or equal to a threshold value. Here, the shooting information may include, for example, a value of a zooming position, a shutter speed, an exposure value, a white balance value, a focus position, a gain value, and a camera tilt.

The determination of the difference in image characteristic based on the difference in characteristics of the shooting information eliminates the need of generating a difference in image characteristic based on a pixel value of a corresponding picture. This feature can reduce the amount of processing required for the determination. Moreover, compared with the determination based on the difference in image characteristic to be generated from a pixel value, the determination of the difference in image characteristic based on the difference in characteristics of the shooting information significantly improves accuracy in the determination.

FIG. 9 shows how a difference in image characteristic of two input images each included in the base view and the dependant view affects an encoded image. In the example in FIG. 9, an anchor picture in the base view is referred to for encoding an anchor picture in the dependant view. In the case where there is a large difference in image characteristic between the two anchor pictures each in the base view and the dependant view, as shown in the encoding result in FIG. 9, the characteristics of a prediction image become significantly different between an inter prediction MB in the the view direction and an intra prediction MB (or inter prediction MB in the temporal direction). This causes degradation in image characteristic.

Hence, in encoding an input image which is likely to cause the degradation in image characteristic, the processing in FIG. 8 eliminates the need of the reference by the dependant view to the base view for encoding the picture. As a result, the picture quality of an encoded image in the dependant view becomes high.

In addition, the video encoding apparatus 200 may include a receiving unit for receiving an operation (instruction) from a user, and chose whether or not the encoding shown in FIG. 4, FIG. 7, or FIG. 8 is executed based on the received operation.

### (Conclusion)

The video encoding apparatus 200 according to Embodiment 2 further includes the receiving unit which receives an operation of the user. Based on the received operation, the encoding unit 10 selects whether to (i) encode, using a P-picture employing only intra prediction, an anchor picture which is located at the start of a GOP and allows a picture to be coded included in the second video signal to make a random access or (ii) encode a P-picture included in the first video signal and capable to refer to a picture corresponding to the anchor picture.

Such a feature makes it possible to encode the dependant view as a stream which requires no base view in decoding, only when the user intends to do so.

Preferably, based on a difference in image characteristic between the anchor picture located at the start of the GOP and a picture included in the first video signal and having approximately the same time information as that of the anchor picture located at the start of a GOP, the encoding unit 10 selects whether to (i) encode, using a P-picture employing only intra prediction, the anchor picture which is located at the start of the GOP or (ii) encode a P-picture included in the first video signal and capable to refer to a picture corresponding the anchor picture.

Preferably, when the difference in image characteristic is large, the encoding unit 10 encodes an anchor picture which is located at the start of a GOP, using a P-picture employing only intra prediction.

This feature makes it possible to improve efficiency in encoding the dependant view.

More preferably, based on a difference between a shooting condition in capturing the first video signal and a shooting condition in capturing the second video signal, the encoding unit 10 selects whether to (i) encode an anchor picture which is located at the start of a GOP, using a P-picture employing only intra prediction, or (ii) encode a P-picture included in the first video signal and capable to refer to a picture corresponding to the anchor picture.

Preferably, when the difference in image characteristic is large, the encoding unit 10 encodes an anchor picture which is located at the start of a GOP, using a P-picture employing only intra prediction.

This feature makes it possible to improve efficiency in encoding the dependant view.

FIG. 10 illustrates another example of the video encoding apparatus 200 shown in FIG. 6. A video encoding apparatus 300 shown in FIG. 10 includes an obtaining unit 310, an encoding unit 320, and an encoding condition setting unit 330. It is noted that the obtaining unit 310 corresponds to the picture memories 101-1 and 101-2 in FIG. 6, the encoding unit 320 corresponds to the first and the second encoding units 11 and 12 in FIG. 6, and the encoding condition setting unit 330 corresponds to the encoding condition setting unit 109 in FIG. 6. Such correspondence relationships are an example, and shall not be defined as they are.

The obtaining unit 310 sequentially obtains pictures included in multiple video signals. Specifically, the obtaining unit 310 sequentially obtains each of the pictures included in the first video signal which is the base view in the MVC standard, and each of the pictures included in the second video signal which is the non-base view in the MVC standard. Furthermore, the obtaining unit 310 may obtain shooting conditions in capturing the first and second video signals.

The encoding unit 320 encodes the pictures obtained by the obtaining unit 310, using intra prediction, inter prediction in the temporal direction, and inter prediction in the view direction. The intra prediction is a prediction mode for referring to an already-encoded block included in a picture to be coded. The inter prediction in the temporal direction is a prediction mode for referring to an already-encoded picture which belongs to the same view as the picture to be coded belongs to. The inter prediction in the view direction is a prediction mode for referring to a picture which belongs to a view that the picture to be coded does not belong to and corresponds to the picture to be coded.

According to an after-described encoding condition determined by the encoding condition setting unit 330, the encoding unit 320 encodes a picture to be coded. Based on the information obtained from the obtaining unit 310, the encoding condition setting unit 330 determines an encoding condition and notifies the encoding unit 320 of the encoding condition.

A first encoding condition is set to (i) encode an anchor picture included in the second video signal, using only the intra prediction, and output the encoded anchor picture in the P-picture format, and (ii) encode a picture in the pictures other than the anchor picture and included in the second video signal, using only the inter prediction in the temporal direction and the intra prediction among the inter prediction in the temporal direction, the inter prediction in the view direction, and the inter prediction.

Moreover, a second encoding condition is to (i) encode an anchor picture included in the second video signal, using the inter prediction in the view direction and the intra prediction, and output the encoded anchor picture in the P-picture format, and (ii) encode a picture in the pictures other than the anchor picture and included in the second video signal, using all of the inter prediction in the temporal direction, the inter prediction in the view direction and the inter prediction.

The encoding condition setting unit 330 obtains a difference in image characteristic between two pictures each included in one of the first and second video signals and having approximately the same time information. Then, the encoding condition setting unit 330 determines to set (i) the first encoding condition in the case where the obtained difference in image characteristic is greater than or equal to a predetermined threshold value, and (ii) the second encoding condition in the case where the obtained difference in image characteristic is smaller than the predetermined threshold value.

For example, the encoding condition setting unit 330 may obtain a difference in image characteristic between the two pictures each included in one of the first and second video signals and having approximately the same time information, by comparing the pixel values of the two pictures. The encoding condition setting unit 330 may also obtain the difference in image characteristic between the two pictures by comparing the shooting conditions of the first and second video signals obtained by the obtaining unit 310.

In encoding intended video, for example, the encoding condition setting unit 330 determines whether a mode is specified to encode the video so that no dependency relationship is established between the base view and the dependant view. Then, the encoding condition setting unit 330 may determine to set (i) the first encoding condition in the case where the mode is specified to encode the video so that no dependency relationship is established between the base view and the dependant view, and (ii) the second encoding condition in the case where no such mode is specified.

Moreover, the video encoding apparatus 100 in FIG. 10 is applicable to the video encoding apparatus 100 in FIG. 1. For example, the obtaining unit 310 corresponds to the picture memories 101-1 and 101-2 in FIG. 1, and the encoding unit 320 corresponds to the first and second encoding units 11 and 12 in FIG. 1. The function of the encoding condition setting unit 330 is included in the first and second encoding unit 11 and 12 in FIG. 1.

The encoding unit 320 encodes an anchor picture using only the intra prediction, and outputs the encoded anchor picture in the I-picture format. Here, the anchor picture is included in the pictures in the first video signal, providing a random access capability, and located at the start of the GOP. Moreover, the encoding unit 320 encodes an anchor picture using only the intra prediction, and outputs the encoded anchor picture in the P-picture format. Here, the anchor picture is included in the pictures in the second video signal. Furthermore, the encoding unit 320 encodes the pictures other than the anchor pictures and included in the first signal and the second video signal using the inter prediction in the temporal direction or the intra prediction. Then, the encoding unit 320 outputs the encoded pictures.

According to the structure in FIG. 10, the base view and the dependant view can be encoded without two types of encoding units as shown in the video encoding apparatuses 100 and 200 in FIGS. 1 and 6.

### Other Embodiments

Moreover, a program including functions similar to those of the units included in the video encoding apparatuses may be recorded in a recording medium such as a flexible disc. This allows an independent computer system to easily implement the processing described in the embodiments. Instead of the flexible disc, an optical disc, an IC card, and a ROM cassette and the like may be used as the recording medium as far as the medium can record the program.

Moreover, functions similar to the units included in the video encoding apparatuses described in the embodiments may be implemented in the form of a large-scale integration (LSI) which is an integrated circuit. Part or all the units may be included in one chip. The LSI may also be referred to as IC, system LSI, super LSI, and ultra LSI, depending on the degree of integration.

Furthermore, the means for circuit integration is not limited to the LSI, and implementation in the form of a dedicated circuit or a general-purpose processor is also available. In addition, it is also acceptable to use a Field Programmable Gate Array (FPGA) that is programmable after the LSI has been manufactured, and a reconfigurable processor in which connections and settings of circuit cells within the LSI are reconfigurable.

Furthermore, if an integrated circuit technology that replaces the LSI appears thorough the progress in the semiconductor technology or an other derived technology, that technology can naturally be used to carry out integration of the constituent elements.

The present disclosure may be applied to a broadcast wave recording apparatus, such as a DVD recorder and a BD recorder, which includes the above video encoding apparatus, and compresses and records broadcast waves sent from a broadcast station.

At least part of the functions of the video encoding apparatuses and the modifications thereof according to the embodiments may be combined.
Although only some exemplary embodiments of the present disclosure have been described in detail above, those skilled in the art will readily appreciate that many modifications are possible in the exemplary embodiments without materially departing from the novel teachings and advantages of the present disclosure. Accordingly, all such modifications are intended to be included within the scope of the present disclosure.

### [Industrial Applicability]

The present disclosure is applicable to a video encoding apparatus which receives video shot from multiple views. For example, the present disclosure is effective for use in a video camera, a digital camera, a video recorder, a cellular phone, and a personal computer.

### [Reference Signs List]

- 100, 200,300: Video encoding apparatus
- 10, 320: Encoding unit
- 11: First encoding unit
- 12: Second encoding unit
- 101-1, 102-2: Picture memory
- 102-1, 102-2: Prediction residual encoding unit
- 103-1, 103-2: Prediction residual decoding unit
- 104-1, 104-2: Local buffer
- 105-1, 105-2: Prediction encoding unit
- 106-1, 106-2: Bitstream generating unit
- 107-1, 107-2: Difference operating unit
- 108-1, 108-2: Addition operating unit
- 109, 330: Encoding condition setting unit
- 151-1, 151-2: Input image signal
- 152-1, 152-2: Difference image signal
- 153-1, 153-2: Coded residual signal
- 154-1, 154-2: Bitstream
- 155-1, 155-2: Decoded residual signal
- 156-1, 156-2: Reconstructed image signal
- 157-1, 157-2: Prediction image signal
- 158: Compulsory intra-prediction instructing signal
- 310: Obtaining unit

## Claims

1. A video encoding apparatus which encodes video signals each corresponding to a different view, the video encoding apparatus comprising:
an obtaining unit configured to sequentially obtain pictures included in the video signals; and
an encoding unit configured to encode the pictures obtained by the obtaining unit using inter prediction in a temporal direction or intra prediction,
wherein the encoding unit is configured to:
encode an anchor picture using only the intra prediction, and output the encoded anchor picture in an I-picture format, the anchor picture being included in the pictures in a first video signal of the video signals, providing a random access capability, and located at a start of a group of pictures (GOP);
encode the anchor picture using only the intra prediction, and output the encoded anchor picture in a P-picture format, the anchor picture being included in the pictures in a second video signal of the video signals; and
encode the pictures other than the anchor pictures and included in the first video signal and the second video signal using the inter prediction in the temporal direction or the intra prediction, and output the encoded pictures.

2. The video encoding apparatus according to Claim 1,
wherein the encoding unit is configured to encode:
the first video signal as a base view in a multi view coding (MVC) standard; and
the second video signal as a non-base view in the MVC standard.

3. The video encoding apparatus according to one of Claims 1 and 2,
wherein the encoding unit is further configured to encode a picture in the pictures included in the second video signal using inter prediction in a view direction which involves reference to an other picture in the pictures included in the first video signal and corresponding to the picture,
the video encoding apparatus further comprises an encoding condition setting unit configured to select one of a first encoding condition and a second encoding condition, the first encoding condition being set to (i) encode the anchor picture using only the intra prediction and (ii) output the encoded anchor picture in the P-picture format, and the second encoding condition being set to (i) encode the anchor picture using inter prediction in the view direction and (ii) output the encoded anchor picture in the P-picture format, and
the encoding unit is configured to execute the encoding according to one of the first encoding condition and the second encoding condition set by the encoding condition setting unit.

4. The video encoding apparatus according to Claim 3,
wherein the first encoding condition is further set to encode a picture in the pictures other than the anchor picture and included in the second video signal, using only the inter prediction in the temporal direction and the intra prediction among the inter prediction, the inter prediction in the temporal direction, and the inter prediction in the view direction, and
the second encoding condition is further set to encode a picture in the pictures other than the anchor picture and included in the second video signal, using all the inter prediction, the inter prediction in the temporal direction, and the inter prediction in the view direction.

5. The video encoding apparatus according to one of Claims 3 and 4,
wherein the encoding condition setting unit is configured to (i) obtain a difference in image characteristic between two pictures each included in one of the first video signal and the second video signal and having approximately same time information, and (ii) select the first encoding condition in the case where the obtained difference in image characteristic is greater than or equal to a predetermined threshold value.

6. The video encoding apparatus according to Claim 5,
wherein the encoding condition setting unit is configured to obtain a difference in image characteristic between the two pictures each included in one of the first video signal and the second video signal and having approximately the same time information, by comparing pixel values of the two pictures.

7. The video encoding apparatus according to Claim 5,
wherein the obtaining unit is further configured to obtain a shooting condition in capturing the first video signal and a shooting condition in capturing the second video signal, and
the encoding condition setting unit is configured to obtain a difference in image characteristic between the two pictures, by comparing the shooting conditions of the first video signal and the second video signal.

8. A video encoding method for encoding video signals each having a different viewpoint, the video encoding method comprising:
sequentially obtaining pictures included in the video signals; and
encoding the pictures obtained in the obtaining using inter prediction in a temporal direction or intra prediction,
wherein the encoding includes:
encoding an anchor picture using only the intra prediction, and outputting the encoded anchor picture in an I-picture format, the anchor picture being included in the pictures in a first video signal of the video signals, providing a random access capability, and located at a start of a GOP;
encoding an anchor picture using only the intra prediction, and outputting the encoded anchor picture in a P-picture format, the anchor picture being included in the pictures in a second video signal of the video signals; and
encoding the pictures other than the anchor pictures and included in the first video signal and the second video signal using the inter prediction in the temporal direction or the intra prediction, and outputting the encoded pictures.
